# EUROPÄISCHE PATENTSCHRIFT

(11) **EP 2 088 169 B1**
(45) Veröffentlichungstag und Bekanntmachung des Hinweises auf die Patenterteilung: **06.04.2016**
(21) Anmeldenummer: 09150289.8
(22) Anmeldetag: 09.01.2009
(51) Int. Cl.: C08K 5/098, C08K 3/22, C08K 3/00, C08L 21/00, B60C 1/00

(54) **KAUTSCHUKMISCHUNG UND DARAUS HERGESTELLTE REIFEN**
RUBBER COMPOSITION AND TYRES MADE FROM SAME
COMPOSITION DE CAOUTCHOUC ET PNEUS PRODUITS À PARTIR DE CELLE-CI

(30) Priorität: 08.02.2008 DE 102008008105
(43) Veröffentlichungstag der Anmeldung: 12.08.2009
(73) Patentinhaber: Continental Reifen Deutschland GmbH, 30165 Hannover (DE)
(72) Erfinder: Weinreich, Hajo, 31840 Hessisch Oldendorf (DE)
(74) Vertreter: Finger, Karsten

(56) Entgegenhaltungen:
- EP-A1- 1 777 260
- WO-A1-2007/122031
- JP-A- 63 027 542
- JP-A- 2003 213 045
- US-A1- 2004 092 636

## Beschreibung

Die Erfindung betrifft eine schwefelvernetzbare Kautschukmischung, insbesondere für Reifen, enthaltend zumindest ein Dienkautschuk, zumindest einen Füllstoff sowie eine Kombination aus i) Zinkoxid und ii) Metallacrylat und/oder Metallmethacrylat. Die Erfindung betrifft ferner Laufstreifen, die zumindest zum Teil aus der mit Schwefel vulkanisierten Kautschukmischung bestehen, sowie Reifen, bei denen Laufstreifen und/oder der Körper des Reifens zumindest zum Teil aus der mit Schwefel vulkanisierten Kautschukmischung bestehen. Schließlich richtet sich die vorliegende Erfindung auf technische Gummiartikel, die zumindest zum Teil aus der mit Schwefel vulkanisierten Kautschukmischung bestehen.

### Technischer Hintergrund

Bei der Schwefelvernetzung von Dienkautschuken ist es üblich als essenzielle Aktivatoren Zinkoxid und Fettsäuren oder Zinkseifen auf Basis von Zinkoxid und Fettsäuren einzusetzen. In Gegenwart von Zink bilden sich Komplexe mit den Beschleunigern, die den Schwefel für die Vernetzung des Kautschuks aktivieren. Durch Verwendung von Zink werden nachteilige Effekte auf die Vulkanisateigenschaften vermieden. So ermöglicht die Verwendung größerer Mengen Zinkoxid, dass eine Nachvernetzung von Inhaltsstoffen mit polysulfidischen Netzbrücken unter thermischer Belastung unter Bildung von ZnS minimiert wird. ZnO und Fettsäuren werden zur Zeit als essenzielle Bestandteile in der Schwefelvulkanisation von schwefelvernetzbaren Kautschukmischungen angesehen. Solche schwefelvernetzbaren Kautschukmischungen finden insbesondere Anwendung in der Herstellung von Reifen sowohl des Laufstreifens als auch des Körpers des Reifens. Aber auch andere Gummiartikel, wie Gurte und Riemen werden aus schwefelvernetzbaren Kautschukmischungen zumindest teilweise hergestellt.

Zinksalze werden in Form des Zinkoxids oder als Zinkseifen zur Verbesserung der Effizienz der Netzwerkausbildung eingesetzt. Nachteil hierbei ist allerdings, dass eine vollständige Ausvulkanisation erst nach langer Nachreaktion erreicht wird. Daher müssen größere Mengen Zinkoxid eingesetzt werden, um diese Nachvernetzung zu minimieren. Der Einsatz großer Mengen an Zinkoxid führt allerdings zu einer Diskussion zur Umweltbelastung durch das Zink. Es wird befürchtet, dass insbesondere durch Abrieb von Reifen größere Mengen Zink an die Umwelt gelangen könnten. Auch führt die Bildung von Zinksulfid (ZnS), das bei Vorhandensein größerer Mengen Zinkoxid entsteht, zu Problemen bei der Herstellung der Gummiartikel, insbesondere bei Vulkanisierung der Reifen.

In der EP 1 777 260 wurde die Verwendung von Prozesshilfsmitteln vorgeschlagen, um die Menge an Zinkoxid in der Kautschukmischung zu verringern. Die darin beschriebenen Prozesshilfsmittel aus Natrium- und/oder Kaliumseifen sowie Mono- und/oder Di-Glycerinestern von gesättigten und/oder ungesättigten C₁₀ bis C₂₈ Carbonsäuren in mit einem bestimmten Gewichtsverhältnis von Seifen zu Glycerinestern sollen eine Herabsetzung der eingesetzten Zinkmengen auf 0,3 bis 2 phr Zinkoxid erlauben. Allerdings zeigen die mit Hilfe der dort beschriebenen Kautschukmischungen erhaltenen Reifen eine nachlassende Traktionseigenschaft bei höheren Temperaturen. Des Weiteren findet eine ungewünschte Nachhärtung der Mischung im Dauergebrauch mit den sich daraus ergebenen Nachteilen statt.

Heutzutage weisen schwefelvernetzbare Kautschukmischungen für Reifen Zinkoxid in einer Menge von 2,5 bis 5 phr auf, siehe bspw. JP 2003213045A, JP 63027542A oder allgemein für Elastomerprodukte US 2004/092636A1 oder WO 2007/122031A1. Typischerweise werden dabei für Reifen 3 phr ZnO eingesetzt, während bei Hochgeschwindigkeitsreifen, wie UHP-Reifen, 4 phr Zinkoxid in der schwefelvernetzbaren Verbindung eingesetzt werden. Ein vollständiger Verzicht auf Zink in schwefelvernetzbaren Dienkautschuken ist allerdings nicht möglich, da es ansonsten zu zu geringen Vernetzungsstärken und deutlich geringeren Steifigkeiten bei den Vulkanisaten und damit zu nicht gewünschten Vulkanisateigenschaften kommt.

Kautschukmischungen unter hoher thermischer und dynamischer Belastung zeigen Veränderungen des Netzwerks auf. Hierbei kann es einerseits zu einem Abbau der polysulfidischen Netzbrücken bei gleichzeitiger Bildung neuer Netzknoten kommen, insbesondere dann, wenn die vollständige Ausvulkanisation sehr langsam verläuft. Dieser als Nachvernetzung bezeichneter Mechanismus erhöht die Steifigkeit der Kautschukprodukte bei Belastung, reduziert aber gleichzeitig das Haftvermögen. Dadurch kann es zum Beispiel bei Reifen zu einem Gripabbau kommen.

Andererseits tritt aber auch der Fall ein, bei dem das erhaltene Netzwerk aus kurzen Schwefelketten durch extreme Belastung zerrissen und die Netzknotendichte verringert wird. Dadurch wird das Kautschukprodukt dynamisch weicher und somit noch anfälliger für dynamische Belastungen. Dieses Phänomen führt zu einem Nachlassen des Produkts bei Erwärmung und zum Beispiel im Falle von Reifen u. a. zu einem Verlust der Seitenführung.

Bei den insbesondere für UHP-Reifen verwendeten schwefelvernetzten ESBR-(emulsionspolymerisierter Styrol-Butadien-Kautschuk) oder SSBR-(lösungspolymerisierter Styrol-Butadien-Kautschuk) Mischungen mit hohem Styrol-Gehalt ist eine langsame Vernetzungskinetik zu beobachten, die sich in einer mehr oder weniger ausgeprägten Nachvernetzung, auch als Marching-Modulus oder schleichende Vernetzung bezeichnet, äußert. Es besteht insbesondere bei UHP-Reifen der Bedarf die Vulkanisationsgeschwindigkeit zu erhöhen, während die Scorch-Sicherheit erhalten bleiben sollte. Natürlich sollten auch die anderen Parameter mindestens gleich bleiben oder verbessert werden. Die Mischung sollte bei gleicher Shore-Härte ein höheres dynamisches Speichermodul E' aufzeigen, da dies eine höhere Stabilität und besseres Handling impliziert. Die Netzdichte im mit Schwefel vulkanisierten Kautschuk sollte nicht verringert werden.

Metallmethacrylate, insbesondere Zinkmethacrylat sind als Peroxidvernetzer bekannte Aktivatoren. So sind aus der WO 02/057350 Kautschukmischungen für Walzenbelege bekannt, die aufbauend auf einem Peroxidsystem Metallacrylate und Metallmethacrylate, wie Zink- (Meth)-Acrylate einsetzt.

Der Erfindung liegt nun die Aufgabe zugrunde, die oben genannten Nachteile bezüglich der Vernetzungsgeschwindigkeit und Vernetzungsdichte zu verbessern unter gleichzeitiger Beibehaltung der Scorch-Sicherheit und der Reduktion der eingesetzten Menge an Zinkoxid.

### Beschreibung der Erfindung

Gelöst wird die Aufgabe erfindungsgemäß dadurch, dass die Kautschukmischung
- zumindest einen Dienkautschuk,
- zumindest einen Füllstoff, und
   - eine Kombination von i) Zinkoxid und ii) Metall- (meth)-Acrylat enthält, wobei das Zinkoxid in einer Menge von 0,1 bis 2,0 phr (Gewichtsteile, bezogen auf 100 Gewichtsteile der gesamten Kautschukmischung) und das Metallacrylat und/oder Metallmethacrylat in einer Menge von 0,5 bis 2,0 phr enthalten sind.

Überraschenderweise zeigt es sich, dass eine Kombination der Aktivatoren Zinkoxid und Metallacrylat und/oder Metallmethacrylat in den genannten Mengen bei schwefelvernetzbaren Dienkautschukmischungen zu verbesserten Kautschukprodukten führt, bei denen die Vernetzungskinetik erhöht sind, ohne dass bei dynamischer thermischer Belastung ein Nachvernetzen oder ein Netzwerkabbau verstärkt auftritt. Des Weiteren zeigen die so erhältlichen Kautschukprodukte, wie Reifen, bei gleicher Härte bei 70°C ein erhöhtes dynamisches Speichermodul und eine deutlich beschleunigte Vernetzungscharakteristik.

Für Reifen, die zumindest teilweise aus einer erfindungsgemäßen, mit Schwefel vulkanisierten Kautschukmischung hergestellt sind, bedeutet dies, dass eine über die Zeit gleich bleibende Performance unter dynamisch thermischer Belastung erzielt wird. Dies ist insbesondere im Bereich der UHP- (ultra high performance) Reifen oder Hochgeschwindigkeitsreifen erwünschenswert.

Die Reifen sind weiterhin im Handling leichter abstimmbar und zeigen eine bessere Stabilität auch bei hohen Temperaturen. Insbesondere im Herstellungsprozess der Reifen können diese erfindungsgemäßen Kautschukmischungen vorteilhaft eingesetzt werden. Die Ausheizung der Kautschukmischungen zur Herstellung der Reifen ist reproduzierbarer, das heißt die Verarbeitbarkeit der in diesen Bereichen eingesetzten Mischungssysteme ist verbessert. Insgesamt lässt sich ein besseres Performanceniveau bei hoher dynamisch-thermischer Belastung bei Verwendung der erfindungsgemäßen Kautschukmischung feststellen.

Daher betrifft die folgende Erfindung Laufstreifen für Reifen enthaltend zumindest zum Teil eine erfindungsgemäße, mit Schwefel vulkanisierte Kautschukmischung.

Die erfindungsgemäße Kautschukzusammensetzung ist aber nicht nur im Laufstreifen, sondern auch im Körper der Reifen einsetzbar. Daher betrifft ein weiterer Aspekt der vorliegenden Erfindung einen Reifen, der zumindest zum Teil aus einer erfindungsgemäßen, mit Schwefel vulkanisierten Kautschukmischung besteht. Aufgrund des guten Performanceniveaus auch bei hoher dynamisch-thermischer Belastung, handelt es sich bei den Reifen insbesondere um Hochgeschwindigkeitsreifen (UHP-Reifen), die als Dienkautschuke in der Kautschukmischung ESBR und/oder SSBR enthalten. Gerade bei diesen ESBR und/oder SSBR Kautschuken tritt das Problem der Nachvernetzung (Marching-Modulus) bei alleiniger Verwendung von Zinkoxid auf. Diese durch schleichende Vernetzung gekennzeichneten Reifen sind insbesondere im Hochgeschwindigkeitsbereich nicht einsetzbar, da die gewünschte Steifigkeit nicht gegeben ist und dadurch die Stabilität bei hoher Temperatur schnell abnimmt.

Die erfindungsgemäßen Kautschukmischungen sind aber auch für andere technische Gummiartikel, wie Gurte und Riemen, insbesondere Zahnriemen, Keilriemen, Zahnrippenriemen, Flachriemen, Fördergurte und bei den genannten Artikeln insbesondere die Laufseite davon, aufgrund ihrer guten Stabilität bei hoher Temperatur und der hohen Steifigkeit bei Belastung sowie der guten Prozessierbarkeit geeignet.

In der erfindungsgemäßen Kautschukmischung kann die Menge an verwendetem Zink in der Mischung, insbesondere an Zinkoxid, deutlich reduziert werden, während die Steifigkeit und die Performance auch bei starker Belastung erhalten bleibt oder sogar verbessert wird.

Das Zinkoxid wird erfindungsgemäß in einer Menge von 0,1 bis 2,0 phr (parts per hundred parts of rubber by weight) eingesetzt.
Die in dieser Schrift verwendete Angabe phr (parts per hundred parts of rubber by weight) ist die in der Kautschukindustrie übliche Mengenangabe für Mischungsrezepturen. Diese Dosierung der Gewichtsteile der einzelnen Substanzen wird dabei stets auf 100 Gewichtsteile der gesamten Masse aller in der Mischung vorhandenen Kautschuke bezogen.

Neben dem Zinkoxid kann die Komponente i) des Weiteren eine Fettsäure umfassen oder eine entsprechende Metallseife, wie Zinkseife. Diese Zinkseife ist aus Zinkoxid und der Fettsäure herstellbar.

Besonders bevorzugt ist die Komponente i) eine Mischung aus Zinkoxid und Stearinsäure.

Als Zinkoxid kann dabei ein hochaktives Zinkoxid eingesetzt werden.

Als Metall-(meth)-acrylat eignet sich insbesondere ein Zink-(meth)-acrylat, wie insbesondere ein Zinkmonomethacrylat oder Zinkdimethacrylat. Alternativ können auch Zinkmonoacrylat oder Zinkdiacrylat verwenden werden.

Das Metall-(meth)-Acrylat liegt erfindungsgemäß in einer Menge von 0,5 bis 2,0 phr vor.

In einer besonders bevorzugten Ausführungsform handelt es sich bei der Kombination von den Komponenten i) und ii) um eine Kombination von Zinkoxid und Stearinsäure mit Zink-(meth)-Acrylat.

Die schwefelvernetzbare Kautschukmischung enthält zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischen Polyisopren (IR), Polybutadien (BR), Styrol-Butadien-Copolymer (SBR), insbesondere emulsionspolymerisierterr Styrol-Butadien-Copolymer (ESBR) und lösungspolymerisierter Styrol-Butadien-Copolymer (SSBR), Ethylen-Propylen-Dien-Kautschuk (EPDM), Halobutylkautschuk (HBR), Cloroprenkautschuk (CR), Isopren-Butadien-Kautschuk (IBR) und Styrol-Isopren-Butadien-Terpolymer. Diese Dienelastomere lassen sich gut zu der erfindungsgemäßen Kautschukmischung verarbeiten und ergeben in den vulkanisierten Reifen gute Reifeneigenschaften.

Besonders bevorzugt ist ein Dienkautschuk in der Kautschukmischung ein emulsionspolymerisierter Styrol-Butadien-Copolymer und/oder ein lösungspolymerisierter Styrol-Butadien-Copolymer. Diese Kautschukmischungen eignen sich besonders für Hochleistungsreifen.

Wenn die Kautschukmischung als Dienkautschuk Polyisopren (IR, NR) enthält, kann es sich hierbei sowohl um cis-1,4-Polyisopren, als auch um 3,4-Polyisopren handeln. Handelt es sich bei Dienkautschuk um ein Naturkautschuk (NR), so liegt dessen Anteil bevorzugt unter 60 phr.

Wie oben bereits ausgeführt, kann es sich bei dem Styrol-Butadien-Copolymer um ein lösungspolymerisiertes Styrol-Butadien-Copolymer (SSBR) mit einem Styrol-Gehalt, bezogen auf das Polymer, von circa 10 - 45 Gew.-% und einem Vinyl-Gehalt (Gehalt an 1,2-gebundenem Butadien, bezogen auf das gesamte Polymer) von 10 - 70 Gew.-% handeln, dieses wird zum Beispiel unter Verwendung von Lithiumalkylen im organischen Lösungsmittel hergestellt. Die SSBR können auch gekoppelt und endgruppenmodifiziert sein. Es können aber auch emulsionspolymerisiertes Styrol-Butadien-Copolymer (ESBR) sowie Mischungen aus ESBR und SSBR eingesetzt werden. Der Styrol-Gehalt des ESBR beträgt circa 15 - 50 Gew.-% und es können die aus dem Stand der Technik bekannten Typen, die durch Copolymerisation von Styrol und 1,3 Butadien in wässriger Emulsion erhalten wurden, verwendet werden.

Die Dienkautschuke können aber auch Mischungen mit anderen Kautschuktypen, wie zum Beispiel Styrol-Isopren-Butadien-Terpolymer, Butylkautschuk, Halobutylokautschuk oder Ethylen-Probylen-Dien-Kautschuk (EPDM) enthalten. Weiterhin enthält die Kautschukmischung einen Füllstoff. Bevorzugt handelt es sich bei diesem Füllstoff zumindest um Ruß und/oder Kieselsäure.

Die verwendeten Ruße sind Ruße, wie sie allgemein in Kautschukmischungen eingesetzt werden. Bevorzugt weisen die Ruße dabei die folgenden Charakteristika auf:
DBP-Zahl (gemäß ASTM D 2414) 90 bis 200 mL/100 g, CTAB-Zahl (gemäß ASTM D 3765) 80 bis 170 m² und lodadsorptionszahl (gemäß ASTM D 1510) 10 bis 250 g/kg. Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN 66131 und 66132) von 35 bis 350 m² vorzugsweise von 115 bis 230 m² und eine CTAB-Oberfläche (gemäß ASTM D 3765) von 30 bis 350 m², vorzugsweise von 120 bis 285 m² aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleich bleibenden Produkteigenschaften ergeben, die zu einer verbesserten Produktivität führen. Als Kieselsäuren können somit z. B. sowohl jene des Typs VN3 (Handelsname) der Firma Degussa als auch hoch dispergierte Kieselsäuren, so genannte HD-Kieselsäuren (z. B. Ultrasil 7000 der Firma Degussa), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH2 oder -Sx- (mit x = 2-8). So können als Silan-Kupplungsagenzien z. B. 3-Mercaptopropyltriethoxysilan, 3-Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruss (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden.

Die Silan-Kupplungsagenzien werden in Mengen von 0,2 bis 30 Gewichtsteilen, vorzugsweise 1 bis 15 Gewichtsteilen, bezogen auf 100 Gewichtsteile Füllstoff, insbesondere Kieselsäure, eingesetzt, da dann eine optimale Anbindung des Füllstoffes an den oder die Kautschuke erfolgen kann.

Die Kautschukmischung kann außerdem noch andere Füllstoffe, wie beispielsweise Alumosilicate, Kreide, Stärke, Magnesiumoxid, Titandioxid oder Kautschukgele enthalten.

In einer besonders bevorzugten Ausführungsform der vorliegenden Erfindung weist die erfindungsgemäße schwefelvernetzbare Kautschukmischung die folgende Zusammensetzung auf:
0 bis 20 phr BR
0 bis 20 phr Naturkautschuk,
60 bis 100 phr ESBR und/oder SSBR,
0 bis 120 phr Kieselsäure,
10 bis 160 phr Ruß,
0,1 bis 3,0 phr Zinkoxid,
0,1 bis 2,0 phr Stearinsäure
0,1 bis 3,0 phr Zinkacrylat und/oder Zinkmethacrylat.

Die Kautschukmischung kann außer den genannten Substanzen noch andere Zusatzstoffe, wie z. B. Weichmacher (z. B. aromatische, naphthylenische oder paraffinische Mineralölweichmacher, MES (mild extraction solvate), RAE (residual aromatic extract) oder TDAE (treated distillate aromatic extract) oder flüssige Polymere, wie z. B. flüssiges Polybutadien aufweisen.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung andere vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Das spezielle Prozesshilfsmittel wird der Fertigmischung zugegeben. Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Läufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Die auf diese Weise mit der erfindungsgemäßen Mischung hergestellten Reifen zeigen gute Eigenschaften.

Die Erfindung soll nun anhand von Vergleichs- und Ausführungsbeispielen, die in der Tabelle 1 zusammengefasst sind, näher erläutert werden.

Die Vergleichsmischungen sind mit V, die erfindungsgemäßen Mischungen mit E gekennzeichnet. In den Mischungen 1 bis 4 (V) wurden die Mengen an Zinkoxid variiert bzw. Zinkoxid und Zinkmethacrylat alleine verwendet.

Die Mischungsherstellung erfolgte unter üblichen Bedingungen in zwei Stufen in einem Labortangentialmischer, wobei das spezielle Prozesshilfsmittel bei der Herstellung der Fertigmischung zugegeben wurde. Es wurden die Umsatzzeiten bis zum Erreichen der relativen Vernetzungsgrade von 5 und 90 % (t5, t90) über ein rotorloses Vulkameter (MDR = Moving Disc Rheometer) gemäß DIN 53 529 und die Mooney-Viskositäten der Mischungen gemäß DIN 53 523 mit einem Scherscheiben-Viskosimeter bei 100 deg. C ermittelt. Als Maß für die Netzwerkstärke dient die Differenz aus dem maximalen Drehmoment MHF und dem minimalen Drehmoment ML ermittelt im Scherscheibenviskosimeter. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
Shore-A-Härte bei Raumtemperatur und 70 °C gemäß DIN 53 505.
dynamischer Speichermodul E' bei 60°C aus dynamisch-mechanischer Messung gemäß DIN 53 513.
Die k(30%/90%)-Werte wurden mit Hilfe der MDR-Messung gemäß DIN 53529 ermittelt. Sie gibt die Umsatzgeschwindigkeit zwischen 30 und 90 % Umsatz an.

**Tabelle 1**

| **Bestandteile** | **Einheit** | **1 (V)** | **2(V)** | **3(V)** | **1(E)** | **4(V)** | **2(E)** |
|---|---|---|---|---|---|---|---|
| Naturkautschuk (TSR) | phr | 5,0 | 5,0 | 5,0 | 5,0 | 5,0 | 5,0 |
| ESBR (SBR 1739, DOW) | phr | 130,625 | 130,625 | 130,625 | 130,625 | 130,625 | 130,625 |
| Ruß (N121, DOW) | phr | 85,0 | 85,0 | 85,0 | 85,0 | 85,0 | 85,0 |
| Weichmacheröl | phr | 45,0 | 45,0 | 35,0 | 35,0 | 35,0 | 35,0 |
| Alterungsschutzmittel | phr | 4,0 | 4,0 | 4,0 | 4,0 | 4,0 | 4,0 |
| Zinkoxid (Rotsiegel, Lehmann & Voss) | phr | 4,0 | 2,0 | - | 2,0 | - | 2,0 |
| Stearinsäure | phr | 0,5 | 0,25 | - | 0,25 | - | 0,25 |
| Prozesshilfsmittel | phr | 1,0 | 1,0 | 1,0 | 1,0 | 1,0 | 1,0 |
| Methacrylat 1: SR709 (Zn-Monomethacrylat, Sartomer) | phr | - | - | 1,0 | 1,0 | - | - |
| Methacrylat 2: SR708(Zn-Dimethyacrylat, Sartomer) | phr | - | - | - | - | 1,0 | 1,0 |
| Beschleuniger | phr | 3,6 | 3,6 | 3,6 | 3,6 | 3,6 | 3,6 |
| Schwefel | phr | 1,7 | 1,7 | 1,7 | 1,7 | 1,7 | 1,7 |

**Tabelle 2**

| **Vernetzungscharakteristika** | | | | | | |
|---|---|---|---|---|---|---|
| | **1 (V)** | **2(V)** | **3(V)** | **1(E)** | **4(V)** | **2(E)₅** |
| k(30%/90%) | 0,34 | 0,36 | 0,24 | 0,49 | 0,21 | 0,47 |
| Fe-Fa | 5,58 | 5,11 | 4,75 | 5,81 | 4,77 | 5,53 |
| T5% in min | 2,25 | 2,2 | 0,93 | 1,45 | 0,93 | 1,47 |
| T90% | 9,75 | 9,55 | 10,74 | 6,72 | 11,96 | 6,940 |

Die Werte wurden aus der MDR-Messung gemäß DIN 53529 erhalten. Fe gleich minimales Drehmoment; Fa gleich maximales Drehmoment. Je kleiner die Werte von k(30%/90%), umso stärker kann ein marching modulus auftreten.

**Tabelle 3**

| | | **1 (V)** | **2(V)** | **3(V)** | **1(E)** | **4(V)** | **2(E)** |
|---|---|---|---|---|---|---|---|
| Aushärtung @ 160°C | Min | 20 | 20 | 20 | 20 | 20 | 20 |
| Hardness 70°C **EPLEXOR nach DIN 53 513** | Shore A | 37 | 37 | 34 | 38 | 36 | 38 |
| E' @ 60°C **GABOMETER (1.2 Mpa** ± **0.8 Mpa @ 30Hz)** | [MPa] | 9,04 | 8,85 | 8,62 | 10,08 | 8,89 | 9,62 |
| Low strain 1-Storage modulus E' @0,4 MPa | [MPa] | 10,99 | 10,77 | 17,55 | 13,31 | 15,91 | 13,64 |
| High strain-Storage modulus E' @ 0,8 MPa | [MPa] | 3,34 | 3,23 | 5,85 | 3,58 | 5,1 | 3,73 |
| Low strain 2-Storage modulus E' @ 0,4 MPa | [MPa] | 10,17 | 9,91 | 18,47 | 13,23 | 17,66 | 13,51 |
| Relative E' (Low 2/Low1) | [%] | 92,6 | 91,1 | 105,2 | 99,4 | 111 | 99 |

Aus den Tabellen 2 und 3 wird ersichtlich, dass erfindungsgemäße Kautschukmischungen enthaltend eine Kombination aus Zinkoxid/Stearinsäure und Zinkmethacrylat synergistisch die Vernetzungscharakteristika verbessern, das heißt die Vernetzungsgeschwindigkeit aber auch die Vernetzungsdichte (Fe - Fa) erhöht sind. Die Untersuchungen zum dynamischen Speichermodul E' mit dem Gabometer zeigen, dass ein synergistischer Performancegewinn erzielt wird. Der Quotient low2/low1 (der Speichermodule bei niedriger Dehnung) gibt dabei einen Anhalt für die Steifigkeitsreduzierung einer Probe nach starker Belastung an. Wünschenswert ist dabei, dass sich dieser Wert um 100% bewegt, sich also möglichst wenig zwischen low2 und low1 unterscheidet.

Die synergistischen Wirkungen werden insbesondere deutlich bei Vergleich der erfindungsgemäßen Kautschukmischungen zu den Vergleichsversuchen V2 und V3 beziehungsweise V4. Bei der Vernetzungsgeschwindigkeit konnte eine deutliche Steigerung um 67 beziehungsweise 70 % beobachtet werden (siehe Tabelle 4 unten).

**Tabelle 4**

| | | **1(V)** | **2(V)** | **3(V)** | **1(E)** | **4(V)** | **2(E)** |
|---|---|---|---|---|---|---|---|
| Vernetzungsgeschwindigkeit | K(30%/90%) | 0,34 | 0,36 | 0,24 | 0,49 | 0,21 | 0,47 |
| | INDEX (Basis= 100) | 100 | 106 | 71 | 144 | 62 | 138 |
| | Performance berechnet aus V2 + V3 bzw. V2 + V4 **synergistischer Performancegewinn [%]** | | | | + 67 | | +70 |

Das dynamische Speichermodul E' bei 60°C ist bei Verwendung der einzelnen Komponenten i) Zinkoxid oder ii) Methacrylat in geringen Mengen in seiner Leistung schlechter als die Verwendung von Zinkoxid in höherer Menge (4,0 phr). Im Gegensatz dazu zeigen die erfindungsgemäßen Kautschukmischungen 1(E) und 2(E) deutlich den erzielten Leistungsgewinn. Im Vergleich zur Kautschukmischung mit 4,0 phr Zinkoxid zeigte die Kautschukmischung 1(E) mit 2,0 phr Zinkoxid und 1,0 phr Zinkmonomethacrylat eine um 19% verbesserte Performance. Bei Verwendung von 1,0 phr Zinkdimethacrylat anstelle des 1,0 phr Zinkmonomethacrylat konnte ein Performancegewinn gegenüber 4,0 phr ZnOvon 10 % beobachtet werden (Tabelle 5).

**Tabelle 5**

| | | **1(V)** | **2(V)** | **3(V)** | **1(E)** | **4(V)** | **2(E)** |
|---|---|---|---|---|---|---|---|
| Dyn. Speichermodu I | E'@ 60°C | 9,04 | 8,85 | 8,62 | 10,08 | 8,89 | 9,62 |
| | INDEX (Basis= 100) | 100 | 98 | 95 | 112 | 98 | 106 |
| | Performance berechnet aus V2 + V3 bzw. V2 + V4 | | | | 93 | | 96 |
| | | | | | +19 | | +10 |
| | **synergistischer Performancegewinn [%]** | | | | | | |

Des Weiteren zeigt die erfindungsgemäße Kautschukmischung eine verbesserte dynamisch-thermische Belastbarkeit auf (Tabelle 6).

**Tabelle 6**

| | | | | | | |
|---|---|---|---|---|---|---|
| **Veränderung unter dynamisch-thermischer Belastung (Gabometer)** | 93 | 91 | 105 | 99 | 111 | 99 |
| Gabometer (relativ E' (Low2/Low1) | | | | | | |

Ein Vergleich der Low2/Low1-Werte, die wie oben erläutert idealerweise nicht unterschiedlich sein sollten, wobei der Quotient dieser Werte als 100 gesetzt wird, zeigt, dass die mit der erfindungsgemäßen Kautschukmischung hergestellten Produkte keiner Steifigkeitsveränderung nach Belastung unterliegen. Hingegen bedeutet ein Wert über 100, dass eine Nachvernetzung im Produkt erfolgte, während ein Wert unter 100 auf einen Netzwerkabbau hinweist. Mit Hilfe der erfindungsgemäßen Kautschukzusammensetzung, die sowohl Zinkoxid als auch ein Metallacrylat und/oder ein Metallmethacrylat enthält, konnte ein fast idealer Wert von 100 erzielt werden, so dass nur oder geringe bzw. keine Steifigkeitsveränderung nach Belastung erfolgt.

Dies bedeutet, dass bei Verwendung der erfindungsgemäßen Mischungen zur Herstellung von Reifen diese eine gleich bleibende Reifeneigenschaft aufzeigen und insbesondere ein gleich bleibendes Performanceniveau haben. Dieses gilt insbesondere für Hochleistungsreifen, wie UHP-Reifen, die großen dynamischthermischen Belastungen unterworfen sind. Die erfindungsgemäßen Mischungen erlauben eine verbesserte Steifigkeit der Reifen und verringern die negativen Effekte der schleichenden Nachvernetzung oder des Abbaus von polysulfidischen Netzbrücken. Der Reifen behält auch bei hohen Temperaturen eine hervorragende Stabilität.

Des Weiteren gibt es auch Vorteile bei der Prozessierbarkeit der erfindungsgemäßen Kautschukmischungen. Die Herstellungszeit der Reifen kann reduziert werden insbesondere auch durch Verbesserung der Prozessierbarkeit, Ausheizzeit, der in diesem Segment angewandten Mischungssysteme.

## Patentansprüche

1. Schwefelvernetzbare Kautschukmischung; insbesondere für Reifen, enthaltend
- zumindest einen Dienkautschuk
- zumindest einen Füllstoff, und
- eine Kombination von i) Zinkoxid und ii) Metallacrylat und/oder Metallmethacrylat,
**dadurch gekennzeichnet, dass** das Zinkoxid in einer Menge von 0,1 bis 2,0 phr (Gewichtsteile, bezogen auf 100 Gewichtsteile der gesamten Kautschukmischung) und das Metallacrylat und/oder Metallmethacrylat in einer Menge von 0,5 bis 2,0 phr enthalten sind.

2. Kautschukmischung nach Anspruch 1, **dadurch gekennzeichnet, dass** neben Zinkoxid Fettsäure vorhanden ist oder eine sich aus Zinkoxid und Fettsäure ergebende Zinkseife.

3. Schwefelvernetzbare Kautschukzusammensetzung nach Anspruch 2, **dadurch gekennzeichnet, dass** die Fettsäure Stearinsäure ist.

4. Kautschukmischung nach einem der Ansprüche 1 bis 3, **dadurch gekennzeichnet, dass** das Metallacrylat und/oder Metallmethacrylat ein Zinkacrylat und/oder Zinkmethacrylat ist.

5. Kautschukmischung nach zumindest einem der vorherigen Ansprüche, **dadurch gekennzeichnet, dass** der bzw. die Dienkautschuk(e) ausgewählt ist/sind aus der Gruppe bestehend aus Naturkautschuk (NR), synthetischen Polyisopren (IR), Polybutadien (BR), Styrol-Butadien-Copolymer (SBR), Ethylen-Propylen-Dien-Kautschuk (EPDM), Halobutylkautschuk (IBR) und/oder Styrol-Isopren-Butadien-Terpolymer.

6. Kautschukmischung nach Anspruch 5, **dadurch gekennzeichnet, dass** als Dienkautschuk emulsionspolymerisierter Styrol-Butadien-Copolymer (ESBR) und/oder lösungspolymerisierter Styrol-Butadien-Copolymer (SSBR) enthalten ist.

7. Kautschukmischung nach zumindest einem der vorherigen Ansprüche, **dadurch gekennzeichnet, dass** sie
0 bis 20 phr BR
0 bis 20 phr Naturkautschuk,
60 bis 100 phr ESBR und/oder SSBR,
0 bis 120 phr Kieselsäure,
10 bis 160 phr Ruß,
0,1 bis 2,0 phr Zinkoxid,
0,1 bis 2,0 phr Stearinsäure
0,5 bis 2,0 phr Zinkacrylat und/oder Zinkmethacrylat enthält.

8. Laufstreifen enthaltend zumindest zum Teil eine mit Schwefel vulkanisierte Kautschukmischung nach zumindest einem der Ansprüche 1 bis 7.

9. Reifen zumindest zum Teil aus einer mit Schwefel vulkanisierten Kautschukmischung nach zumindest einem der Ansprüche 1 bis 7.

10. Reifen nach Anspruch 9, wobei es sich um einen Hochgeschwindigkeitsreifen (UHP-Reifen) handelt.

11. Gummiartikel zumindest teilweise hergestellt aus einer mit Schwefel vulkanisierten Kautschukmischung nach zumindest einem der Ansprüche 1 bis 7.

## Claims

1. Sulphur-cross-linkable rubber mixture; in particular for tyres, comprising
- at least one diene rubber
- at least one filler, and
- a combination of i) zinc oxide and ii) metal acrylate and/or metal methacrylate,
**characterized in that** the quantity of zinc oxide present is from 0.1 to 2.0 phr (parts by weight, based on 100 parts by weight of the entire rubber mixture) and the quantity of the metal acrylate and/or metal methacrylate present is from 0.5 to 2.0 phr.

2. Rubber mixture according to Claim 1, **characterized in that** fatty acid, or a zinc soap deriving from zinc oxide and fatty acid, is present alongside zinc oxide.

3. Sulphur-cross-linkable rubber composition according to Claim 2, **characterized in that** the fatty acid is stearic acid.

4. Rubber mixture according to any of Claims 1 to 3, **characterized in that** the metal acrylate and/or metal methacrylate is a zinc acrylate and/or zinc methacrylate.

5. Rubber mixture according to at least one of the preceding claims, **characterized in that** the diene rubber(s) is/are selected from the group consisting of natural rubber (NR), synthetic polyisoprene (IR), polybutadiene (BR), styrene-butadiene copolymer (SBR), ethylene-propylene-diene rubber (EPDM), halobutyl rubber (IBR) and/or styrene-isoprene-butadiene terpolymer.

6. Rubber mixture according to Claim 5, **characterized in that** diene rubber present comprises emulsion-polymerised styrene-butadiene copolymer (ESBR) and/or solution-polymerised styrene-butadiene copolymer (SSBR).

7. Rubber mixture according to at least one of the preceding claims, **characterized in that** it comprises
from 0 to 20 phr of BR,
from 0 to 20 phr of natural rubber,
from 60 to 100 phr of ESBR and/or SSBR,
from 0 to 120 phr of silica,
from 10 to 160 phr of carbon black,
from 0.1 to 2.0 phr of zinc oxide,
from 0.1 to 2.0 phr of stearic acid,
from 0.5 to 2.0 phr of zinc acrylate and/or zinc methacrylate.

8. Tread comprising at least to some extent a sulphur-vulcanised rubber mixture according to at least one of Claims 1 to 7.

9. Tyre at least to some extent made of a sulphur-vulcanised rubber mixture according to at least one of Claims 1 to 7.

10. Tyre according to Claim 9, which is a high-velocity tyre (UHP tyre).

11. Rubber item at least to some extent produced from a sulphur-vulcanised rubber mixture according to at least one of Claims 1 to 7.

## Revendications

1. Mélange de caoutchouc réticulable au soufre, notamment pour pneus, contenant :
- au moins un caoutchouc diénique,
- au moins une charge, et
- une combinaison de i) de l'oxyde de zinc et ii) un acrylate métallique et/ou un méthacrylate métallique,
**caractérisé en ce que** l'oxyde de zinc est contenu en une quantité de 0,1 à 2,0 pce (parties en poids, par rapport à 100 parties en poids du mélange de caoutchouc total) et l'acrylate métallique et/ou le méthacrylate métallique en une quantité de 0,5 à 2,0 pce.

2. Mélange de caoutchouc selon la revendication 1, **caractérisé en ce qu'**en plus de l'oxyde de zinc, un acide gras est présent ou un savon de zinc formé à partir d'oxyde de zinc et d'un acide gras.

3. Composition de caoutchouc réticulable au soufre selon la revendication 2, **caractérisée en ce que** l'acide gras est l'acide stéarique.

4. Mélange de caoutchouc selon l'une quelconque des revendications 1 à 3, **caractérisé en ce que** l'acrylate métallique et/ou le méthacrylate métallique sont l'acrylate de zinc et/ou le méthacrylate de zinc.

5. Mélange de caoutchouc selon au moins l'une quelconque des revendications précédentes, **caractérisé en ce que** le ou les caoutchoucs diéniques sont choisis dans le groupe constitué par le caoutchouc naturel (NR), le polyisoprène synthétique (IR), le polybutadiène (BR), un copolymère de styrène-butadiène (SBR), le caoutchouc d'éthylène-propylène-diène (EPDM), le caoutchouc d'halobutyle (IBR) et/ou le terpolymère de styrène-isoprène-butadiène.

6. Mélange de caoutchouc selon la revendication 5, **caractérisé en ce qu'**un copolymère de styrène-butadiène polymérisé en émulsion (ESBR) et/ou un copolymère de styrène-butadiène polymérisé en solution (SSBR) est contenu en tant que caoutchouc diénique.

7. Mélange de caoutchouc selon au moins l'une quelconque des revendications précédentes, **caractérisé en ce qu'**il contient
0 à 20 pce de BR,
0 à 20 pce de caoutchouc naturel,
60 à 100 pce d'ESBR et/ou de SSBR,
0 à 120 pce de silice,
10 à 160 pce de noir de carbone,
0,1 à 2,0 pce d'oxyde de zinc,
0,1 à 2,0 pce d'acide stéarique,
0,5 à 2,0 pce d'acrylate de zinc et/ou de méthacrylate de zinc.

8. Bande de roulement contenant au moins en partie un mélange de caoutchouc vulcanisé avec du soufre selon au moins l'une quelconque des revendications 1 à 7.

9. Pneu fabriqué au moins en partie en un mélange de caoutchouc vulcanisé avec du soufre selon au moins l'une quelconque des revendications 1 à 7.

10. Pneu selon la revendication 9, dans lequel il s'agit d'un pneu haute vitesse (pneu UHP).

11. Article en caoutchouc fabriqué au moins en partie en un mélange de caoutchouc vulcanisé avec du soufre selon au moins l'une quelconque des revendications 1 à 7.
